# EUROPÄISCHE PATENTANMELDUNG

(11) **EP 1 316 504 A1**
(43) Veröffentlichungstag der Anmeldung: **04.06.2003**
(21) Anmeldenummer: 02024076.8
(22) Anmeldetag: 29.10.2002
(51) Int. Cl.: B64F 1/32, B61B 13/08

(54) **Gepäcktransportsystem über lange Distanzen**

(30) Priorität: 29.11.2001 DE 10158763
(71) Anmelder: ABB PATENT GmbH, 68526 Ladenburg (DE)
(72) Erfinder: Müller, Steffen, Dr.-Ing., 81669 München (DE); Baier, Michael, Dipl.-Ing., 68309 Mannheim (DE); Waldi, Wolfgang, Dipl.-Ing., 69226 Nussloch-Maisbach (DE); Nagel, Günther, Dr.rer.nat., 76676 Graben-Neudorf (DE); Koini, Martin, Dipl.-Ing., 57636 Sörth (AT); Gutermuth, Georg, Dipl.-Phys., 69115 Heidelberg (DE)
(74) Vertreter: Miller, Toivo

(57) **Zusammenfassung**

Es wird ein Gepäcktransportsystem über lange Distanzen vorgeschlagen,
- mit einem Gepäck-Verteilnetzwerk (3) mit mehreren Aufnahmepunkten (1.1, 1.2...1.n) zur Aufnahme des Gepäcks und mehreren Zielpunkten (2.1, 2.1, 2.3...2.m) zur Entladung des Gepäcks, wobei die Aufnahmepunkte (1.1, 1.2...1.n) und die Zielpunkte (2.1, 2.1, 2.3...2.m) über eine Vielzahl von komplett passiven Schienenmodulen (4) und Kreuzungsmodulen (5) miteinander verbunden sind,
- mit einer Vielzahl von Fahrzeugen (6), welche das Gepäck zwischen den Aufnahmepunkten (1.1, 1.2...1.n) und den Zielpunkten (2.1, 2.1, 2.3...2.m) transportieren, wobei diese Fahrzeuge (6) gemäß dem Magnetschwebeprinzip mittels eines berührungslosen Linearantriebes (12) innerhalb des Gepäck-Verteilnetzwerkes (3) bewegt werden,
- mit einem berührungslosen induktiven Energieübertragungssystem, bestehend aus einem induktiven Energieerzeugungssystem (10) und einer Vielzahl lokaler induktiver Energieaufnahmesysteme (11) in den einzelnen Fahrzeugen (6) und
- mit einem übergeordneten Leitrechner (7), welcher über ein berührungsloses Kommunikationssystem - aufgebaut aus einer übergeordneten Kommunikationseinrichtung (8) und lokalen Kommunikationseinrichtungen (15) in den Fahrzeugen - mit lokalen Rechnern (13) in den einzelnen Fahrzeugen (6) kommuniziert.

## Beschreibung

Die Erfindung bezieht sich auf ein Gepäcktransportsystem über lange Distanzen. Die Erfindung kann beispielsweise auf Flughäfen für den schnellen Transport von Gepäckstücken über längere Distanzen - größer als 200 Meter - verwendet werden und ist daher insbesondere von Interesse für den Transport der Gepäckstücke zu Zusatzterminals und Logistikgebäuden.

Die Geschwindigkeit des gesamten Gepäcktransportes in Flughäfen wird durch das gewählte Transportverfahren bestimmt. Es sind drei unterschiedliche Verfahren bzw. Gepäcktransportsysteme allgemein bekannt, um Gepäckstücke in Flughäfen über längere Distanzen zu transportieren:
- Die Gepäckstücke werden direkt auf Förderbänder gelegt und auf diesen gefördert. Hierdurch kann ein einzelnes Gepäckstück mit einer Geschwindigkeit von maximal ungefähr 3 m/s bewegt werden.
- Ein einzelnes Gepäckstück wird in eine Schale gelegt. Diese Schalen werden vorzugsweise über Förderbänder transportiert. Hierdurch kann ein einzelnes Gepäckstück mit einer Geschwindigkeit von maximal ungefähr 6 m/s bewegt werden.
- Ein einzelnes Gepäckstück wird in ein Aufnahmebehältnis eines schienengebundenen Fahrzeuges gelegt und dieses schienengebundene Fahrzeug bewegt sich längs eines Streckennetzes. Hierdurch kann ein einzelnes Gepäckstück mit einer Geschwindigkeit von maximal ungefähr 10 m/s bewegt werden.

Problematisch an diesen vorstehend erwähnten allgemein bekannten Verfahren bzw. Systemen sind folgende Aspekte:
- Die zunehmende Gebäudekomplexität der Flughäfen erfordert ein zunehmendes Verbindungsstreckennetz mit Teilstreckenlängen, die bis zu einigen Kilometern lang sein können. Wird das Gepäck unter Einsatz der allgemein bekannten Verfahren transportiert, benötigt ein Gepäckstück relativ viel Zeit, um beispielsweise vom Check-In bis zum Flugzeug zu gelangen.
- Die allgemein bekannten Systeme sind relativ inflexibel, wenn es darum geht, bestehende Anlagen zu erweitern. Damit geht in der Regel eine recht komplexe Neuund Umplanung einher.
- Die Transportgeschwindigkeiten der allgemein bekannten Systeme liegen bei ungefähr 10 m/s und sind damit zu gering, wobei zusätzlich zu beachten ist, daß beim Betrieb nahe der oberen Leistungsgrenze ein erheblicher Optimierungsaufwand erforderlich ist.
- Die allgemein bekannten Systeme erfordern einen erheblichen Wartungsaufwand, da die eingesetzten mechanischen Teile - wie beispielsweise Rollen und Lager - verschleißen und zudem relativ störanfällig sind. Ein besonderes Problem stellt beispielsweise das Verhaken von Bändern in laufenden Teilen dar.

Der Erfindung liegt die Aufgabe zugrunde, ein sehr schnelles Gepäcktransportsystem über lange Distanzen anzugeben.

Diese Aufgabe wird erfindungsgemäß gelöst durch ein Gepäcktransportsystem über lange Distanzen
- mit einem Gepäck-Verteilnetzwerk mit mehreren Aufnahmepunkten zur Aufnahme des Gepäcks und mehreren Zielpunkten zur Entladung des Gepäcks, wobei die Aufnahmepunkte und die Zielpunkte über eine Vielzahl von komplett passiven Schienenmodulen und Kreuzungsmodulen miteinander verbunden sind,
- mit einer Vielzahl von Fahrzeugen, welche das Gepäck zwischen den Aufnahmepunkten und den Zielpunkten transportieren, wobei diese Fahrzeuge gemäß dem Magnetschwebeprinzip mittels eines berührungslosen Linearantriebes innerhalb des Gepäck-Verteilnetzwerkes bewegt werden,
- mit einem berührungslosen induktiven Energieübertragungssystem, bestehend aus einem induktiven Energieerzeugungssystem und einer Vielzahl lokaler induktiver Energieaufnahmesysteme in den einzelnen Fahrzeugen und
- mit einem übergeordneten Leitrechner, welcher über ein berührungsloses Kommunikationssystem - aufgebaut aus einer übergeordneten Kommunikationseinrichtung und lokalen Kommunikationseinrichtungen in den Fahrzeugen - mit lokalen Rechnern in den einzelnen Fahrzeugen kommuniziert.

Dabei sind magnetische Schwebesysteme (Magnetschwebetechnik) auf dem Gebiet der Personenbeförderung allgemein bekannt. Es handelt sich allerdings dabei nicht um komplexe Netzwerke (Verteilnetze) mit einer Vielzahl von Aufnahmepunkten und einer Vielzahl von Zielpunkten, sondern um rein lineare Strukturen von einem einzigen Aufnahmepunkt zu einem einzigen Zielpunkt. Mittels der Erfindung wird die Technologie der Magnetschwebetechnik so modifiziert, daß damit der Einsatz zum Gütertransport in Netzwerken möglich ist. Dies setzt insbesondere voraus,
- daß ein möglichst geringer Verschleiß während der Benutzung auftritt,
- daß es nötig ist, zur Steuerung von mehreren (hunderten) von Fahrzeugen in einem Netzwerk alle einzelnen Fahrzeuge mit genügend Intelligenz, Information und Sensorik auszustatten, so daß sie selbst lokal und schnell die richtigen Entscheidungen für den Gepäcktransport fällen können.

Die mit der Erfindung erzielbaren Vorteile bestehen insbesondere darin, daß die Fahrzeuge des Gepäcktransportsystems während ihrer Bewegung ohne jeglichen mechanischen Kontakt zur Schiene oder sonstigen Umwelt auskommen. Zusätzlich kommt die mechanische Ausführung des Antriebssystems des Gepäck-Verteilnetzwerkes ohne jede Verschleißteile aus. Insgesamt ist der erforderliche Wartungsaufwand im Vergleich zum allgemein bekannten Stand der Technik wesentlich reduziert. Es wird eine wünschenswerte Erhöhung der Transportgeschwindigkeit der Gepäckstücke erzielt, was sich insbesondere bei langen Distanzen zwischen Check-In und Flugzeug sehr vorteilhaft auswirkt. Mit der erzielten Erhöhung der Transportgeschwindigkeit erhöht sich auch der mögliche Gesamtdurchsatz an Gepäckstücken innerhalb des Transportsystems, mit anderen Worten, es können mehr Gepäckstücke in kürzerer Zeit transportiert werden.

Insgesamt zeichnet sich das vorgeschlagene Gepäcktransportsystem sowohl mechanisch als auch konzeptionell durch eine erhöhte Ausfallsicherheit aus. Ein weiterer Vorteil ist, daß der Gepäcktransport trotz erhöhter Transportgeschwindigkeit geräuscharmer erfolgt.

Weitere Vorteile sind aus der nachstehenden Beschreibung ersichtlich.

Vorteilhafte Ausgestaltungen der Erfindung sind in den Unteransprüchen gekennzeichnet.

Die Erfindung wird nachstehend anhand der in der Zeichnung dargestellten Ausführungsbeispiele erläutert. Es zeigen:
- Fig.1: den prinzipiellen Aufbau eines Gepäck-Verteilnetzwerkes,
- Fig. 2: ein Fahrzeug des Gepäcktransportsystems.

Allgemein sind für den schnellen Transport von Gepäckstücken mit Fahrzeugen (Sammelbehältern) mit einer Geschwindigkeit über 10 m/s (Schnellförderung) über lange Distanzen geeignet:
- Förderung mittels Magnetschwebetechnik mit und ohne Linearantrieb; Linearantrieb mit Langstator (Stator enthält die Wicklung) oder Homopolarantrieb mit Kurzständer (Stator enthält nur magnetisch wirksames Material, Eisen);
- Förderung nach dem Seilbahnprinzip mit Einseil- oder Doppelseilantrieb;
- Förderung nach dem Kabelbahn-Prinzip mit Ketten- oder Seilvortriebssystemen;
- Förderung nach dem Luftkissen-Prinzip mit konventionellem oder luftbasiertem Vortrieb;
- Förderung nach dem Rohrpost-Prinzip mittels Druckgradientenausnutzung und/oder elektrischen Antrieben;
- Förderung mit Verbrennungsantriebssystemen der unterschiedlichen Art (Benzin, Diesel, Brennstoffzelle);
- Förderung nach dem Schwemm-Prinzip mittels Wasser/Flüssigkeitsvortriebskräften;
- Förderung mittels eines abrollenden Zylinders, in dem sich das Gepäck befindet.

Allgemein ist es von Wichtigkeit, daß der Gepäcktransport in großem Umfang automatisiert abläuft, wobei ein geeignetes Prozeßleitsystem den Prozeßablauf realisiert, d. h. die Regelung zurückzulegender Routen der Gepäckstücke sowie der Geschwindigkeit des Transports und die Verwaltung leerer Fahrzeuge (Endcontainer bzw. Sammelbehälter) erfolgt über ein übergeordnetes Gepäckmanagementsystem.

Nachstehend wird ein auf Fahrzeugen mit berührungslosen Linearantrieben basierendes Gepäcktransportsystem beschrieben.

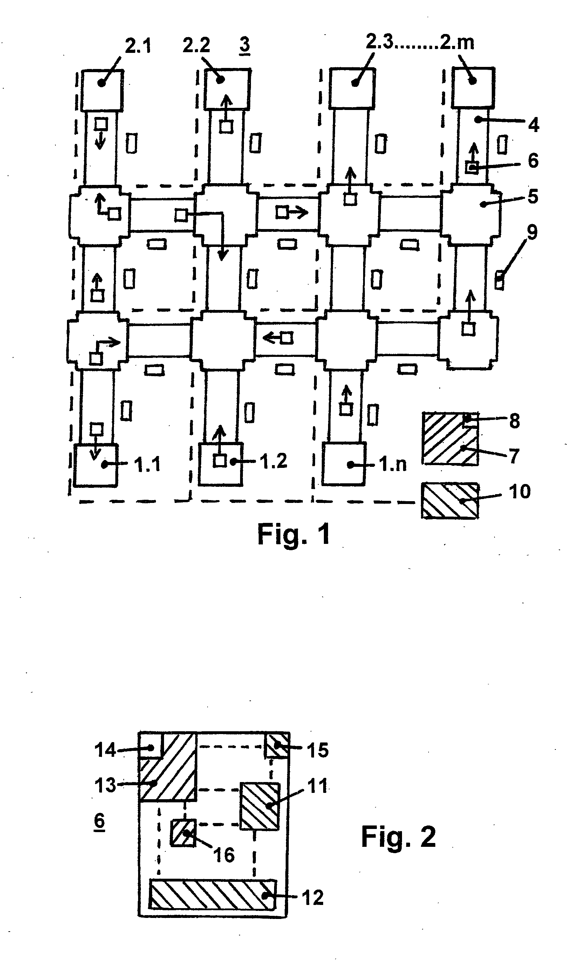

In Fig. 1 ist der prinzipielle Aufbau eines erfindungsgemäßen Gepäck-Verteilnetzwerkes dargestellt. Das gezeigte Gepäck-Verteilnetzwerk 3 weist n (n = beliebige ganze Zahl) Aufnahmepunkte 1.1, 1.2...1.n für das Gepäck bzw. für die einzelnen Gepäckstücke sowie m (m = beliebige ganze Zahl, unabhängig von n) Zielpunkte 2.1, 2.2, 2.3...2.m auf. Die Aufnahmepunkte 1.1, 1.2...1.n sind über ein System von komplett passiven Schienenmodulen 4 und Kreuzungsmodulen 5 mit den Zielpunkten 2.1, 2.2, 2.3...2.m verbunden. Es ist von Wichtigkeit, daß die Schienenmodule/Kreuzungsmodule keine elektrisch oder magnetisch aktiven Teile aufweisen.

Die Schienenmodule 4 können gerade ausgebildet sein oder in gewünschter Richtung mit gewünschtem Radius gebogen bzw. gekrümmt sein. Des weiteren können die Kreuzungsmodule 5 mit gewünschtem Abzweigewinkel und/oder Radius ausgeführt sein. Es können mittels der Schienenmodule 4 Teilstrecken von einigen Kilometern Länge realisiert werden. Die gebildeten Strecken können in sämtlichen Richtungen mit unterschiedlichen Radien gebogen sein, um derart Kurven, Steigungen und Steilkurven zu realisieren.

Zur Beförderung des Gepäcks bzw. individueller Güter dienen eine Vielzahl von Fahrzeugen 6 (die aktuelle Transportrichtung ist beispielhaft in Fig. 1 durch Pfeile gekennzeichnet), welche an den einzelnen Aufnahmepunkten 1.1, 1.2...1.n mit dem zu befördernden Gepäck beladen werden und welche über das System von Schienenmodulen 4 und Kreuzungsmodulen 5 zu jedem gewünschten Zielpunkt 2.1, 2.2, 2.3...2.m gelangen können. Am gewünschten Zielpunkt 2.1, 2.2, 2.3...2.m erfolgt die Entladung des Gepäcks.

Dem Gepäck-Verteilnetzwerk 3 ist ein übergeordneter Leitrechner 7 zugeordnet, welcher über ein berührungsloses Kommunikationssystem (Signalübertragungssystem) mit den einzelnen Fahrzeugen 6 des Systems kommuniziert. Für die berührungslose Kommunikation - beispielsweise über Funkwellen - weist der Leitrechner 7 eine übergeordnete Kommunikationseinrichtung 8 auf. Eine Vielzahl passiver Standortmelder 9 an den einzelnen Schienenmodulen 4 und/oder Kreuzungsmodulen 5 dienen den Fahrzeugen 6 zur Überprüfung ihres aktuellen Standortes. Dabei ist es von Wichtigkeit, daß die Standortmelder 9 keine aktiven Impulse bzw. Signale abgeben. Für die Energieversorgung der Fahrzeuge 6 ist ein berührungsloses induktives Energieübertragungssystem (bestehend aus induktivem Erzeugungssystem und induktiven Energieaufnahmesystemen) vorgesehen und somit weist das Gepäck-Verteilnetzwerk 3 ein induktives Energieerzeugungssystem 10 auf, in der Funktion/Wirkung vergleichbar mit der Primärwicklung eines Transformators.

In Fig. 2 ist der prinzipielle Aufbau eines einzelnen Fahrzeuges 6 für das Gepäcktransportsystem dargestellt. Jedes Fahrzeug 6 weist ein induktives Energieaufnahmesystem 11 auf - in der Funktion/Wirkung vergleichbar mit der Sekundärwicklung eines Transformators -, welches zum induktiven Energieerzeugungssystem 10 korrespondierend ausgebildet ist und insbesondere zur Speisung eines berührungslosen Linearantriebes 12 dient. Jedes Fahrzeug 6 ist des weiteren mit einem lokalen Rechner 13 bestückt, welchem eine die aktuelle Netzwerktopologie betreffende Softwarekarte 14 zugeordnet ist. Die Fahrzeuge 6 weisen ferner beispielsweise eine Kommunikationseinrichtung 15 für die berührungslose Kommunikation mit der vorstehend erwähnten übergeordneten Kommunikationseinrichtung 8 auf.

Wichtige Baukomponente aller Fahrzeuge 6 ist schließlich eine Sensorik 16, welche insbesondere im Zusammenwirken mit den passiven Standortmeldern 9 den momentanen Standort eines Fahrzeuges feststellen kann und welche Näherungssensoren umfaßt, die eine präzise und berührungslose Orientierung und Fortbewegung innerhalb der Schienenmodule 4 und Kreuzungsmodule 5 sicherstellt und insbesondere wirksam verhindert, daß sich zwei Fahrzeuge 6 gegenseitig am Vorwärtskommen behindern oder miteinander kollidieren.

Selbstverständlich dient das induktive Energieaufnahmesystem 11 des Fahrzeuges auch zur Energieversorgung von Rechner 13, Kommunikationseinrichtung 15 und Sensorik 16. In gleicher Weise ist es selbstverständlich, daß der lokale Rechner 13 in Verbindung mit der Kommunikationseinrichtung 15 sowie in Verbindung mit der Sensorik 16 steht und zur Ansteuerung/Regelung des Linearantriebes 12 herangezogen wird, wobei diese Ansteuerung/Regelung des Linearantriebes 12 in Abhängigkeit der Signale des übergeordneten Leitrechners 7, der Signale des lokalen Rechners 13 (inklusive Softwarekarte 14) und der Signale der Sensorik 16 erfolgt.

Alternativ zur vorstehend erwähnten drahtlosen Kommunikationsmöglichkeit zwischen Kommunikationseinrichtung 8 und Kommunikationseinrichtungen 15 über Funksignale kann die Kommunikation auch berührungslos über das induktive Energieübertragungssystem mit induktivem Energieerzeugungssystem 10 und induktivem Energieaufnahmesystem 11 selbst erfolgen, beispielsweise durch entsprechende Modulation/Demodulation der Übertragungsfrequenz zur Übermittlung der Signale über die Energieversorgung (gemäß dem allgemein bekannten Prinzip der Power Line Communication PLC).

Das magnetische Schwebesystem (Magnetschwebetechnik) mit den Komponenten Schienenmodule 4 /Kreuzungsmodule 5 einerseits und Fahrzeugen 6 mit berührungslosem Linearantrieb 12 andererseits könnte zwar prinzipiell auf magnetischer Abstoßung oder Anziehung basieren, jedoch erfordern Ausführungsformen, welche über magnetische Abstoßung schweben lassen, magnetisch aktive Schienen und Kreuzungen, so daß derartige Ausführungsformen beim vorgeschlagenen Gepäcktransportsystem nicht eingesetzt werden. Bezüglich der berührungslosen Linearantriebe 12 sind verschiedene Ausführungsarten mit Homopolarmotor oder Asynchronmotor realisierbar. Ein Vorteil des magnetischen Schwebesystems ist es dabei, daß die Komponenten Schienenmodule 4 / Kreuzungsmodule 5 einerseits und Linearantriebe 12 andererseits den gleichen Magnetkern benutzen.

Die Fahrzeuge 6 haben während ihrer Vorwärtsbewegung keinerlei Schienen- oder Bodenkontakt, sondern schweben durchgehend - auch in Weichen, Kurven, Kreuzungen oder Steigungen. Die Fahrzeuge sind mit Vorrichtungen versehen, welche eine berührungslose Seitenführung gewährleisten, beispielsweise mit Hilfe der Sensorik 16.

Die Kreuzungsmodule 5 weisen jeweils vier Anschlüsse für Schienenmodule 4 auf, wobei es jedoch nicht erforderlich ist, daß bei jedem Kreuzungsmodul 5 auch alle vier vorhandenen Anschlüsse belegt sind. Einzelne Anschlüsse eines Kreuzungsmoduls 5 können vielmehr unter Einsatz eines standardisierten Profils verschlossen sein. Auf diese Weise ist es in einfacher Weise möglich, mittels der Kreuzungsmodule 5 nicht nur Kreuzungen, sondern auch Weichen und Abzweige zu realisieren. Falls zu einem späteren Zeitpunkt eine Erweiterung des Gepäck-Verteilnetzwerkes 3 erforderlich ist, können die standardisierten Profile der nicht belegten Anschlüsse von Kreuzungsmodulen 5 entfernt und die nunmehr freien Anschlüsse können nachträglich mit Schienenmodulen 4 verbunden werden, um derart vorteilhaft in einfacher Art und Weise die gewünschte Erweiterung zu realisieren. Für eine Erweiterung des Gepäck-Verteilnetzwerkes 3 ist somit der modulare Aufbau des Netzes von großem Vorteil, wobei unter dem "modularen Aufbau des Netzes" nicht nur der mechanisch modulare Aufbau (mit Schienenmodulen 4, Kreuzungsmodulen 5), sondern darüber hinaus auch der informationstechnisch modulare Aufbau verstanden wird.

Von Wichtigkeit ist es weiterhin, daß die mittels der Kreuzungsmodule 5 realisierten Weichen keinerlei Schaltimpulse erfordern, die von der Weiche ausgehen oder ausgeführt werden müssen. Die Weichen sind vollständig passiv, nicht beweglich und haben keine elektrisch oder magnetisch aktiven Teile.

Die Länge des einzelnen Fahrzeuges 6 ist vorzugsweise minimiert auf eine standardisierte Fahrzeuglänge, wobei ein einzelnes Fahrzeug 6 beispielsweise auch als Doppelfahrzeug mit Verbindung über ein geeignetes Gelenk ausgebildet sein kann.

Unter dem vorstehend erwähnten "informationstechnisch modularen Aufbau" wird insbesondere verstanden, daß das vom übergeordneten Leitrechner 7 umgesetzte, übergeordnete Gepäckmanagementsystem baukastenartig aufgebaute, untergeordnete Kontrollsysteme aufweist. Hierdurch ist man einerseits in der Lage ist, sich unterschiedlichen flughafenspezifischen Vorgaben in einfacher Weise flexibel anzupassen. Andererseits ist es hierdurch in einfacher Art möglich, bei Änderung dieser flughafenspezifischen Vorgaben infolge einer durchgeführten Erweiterung, das Gepäckmanagement entsprechend anzupassen, wie vorstehend bereits angesprochen worden ist.

Das übergeordnete Gepäckmanagementsystem gibt für den Gesamtgepäck-Transportprozeß vor:
- Anzahl der Transportorder
   - Aufnahmedestination jeder einzelnen Transportorder
   - Ankunftszeit bei Aufnahmedestination
   - Abgabedestination
   - Ankunftszeit an Abgabedestination
   - Priorität jeder einzelnen Transportorder
- Update der Transportorder

Diese Vorgaben werden den einzelnen untergeordneten, den lokalen Rechnern 13 zugeordneten Kontrollsystemen (Controller) des Gepäcktransportsystems zugeführt. Das mechanische Transportsystem setzt diese Vorgaben um.

Gleichzeitig melden die einzelnen untergeordneten Kontrollsysteme des Gepäcktransportsystems folgende Informationen an das übergeordnete Gepäckmanagementsystem zurück:
- Bestätigung der einzelnen Transportorder
- Bestätigung der erfolgreichen Ausführung
- eventuell Fehlermeldung

Während der Erweiterung des Gepäck-Verteilnetzwerkes 3 kann das Gepäck-Verteilnetzwerkes 3 vorteilhaft weiter betrieben werden und es sind lediglich die unmittelbar betroffenen Strecken kurzzeitig zu sperren, was beispielsweise durch Einsatz des Leitrechners 7 erfolgt, welcher die lokalen Rechner 13 der einzelnen Fahrzeuge 6 entsprechend informiert. Damit nach erfolgter Erweiterung die sich innerhalb des erweiterten Gepäck-Verteilnetzwerkes 3 bewegenden Fahrzeuge 6 Kenntnis von der neuen Struktur des erweiterten Netzes erhalten, werden die Softwarekarten 14 der Fahrzeuge entsprechend aktualisiert.

Die Bewegung eines einzelnen Fahrzeuges 6 mit dem zu transportierenden Gepäckstück von einem bestimmten Aufnahmepunkt 1.1, 1.2...1.n zu einem gewünschten Zielpunkt 2.1, 2.2, 2.3...2.m erfolgt unter Einsatz der lokalen Rechner 13 und des zentralen Leitrechners 7. Dabei führen die einzelnen Fahrzeuge 6 autonom lokale Entscheidungen aus, wobei jeweils die Signale der Sensorik 16 und die Kommunikationssignale zwischen einzelnen Fahrzeugen 6 und zwischen Fahrzeug 6 und Leitrechner 7 einbezogen sind. Diese dezentrale, lokale Intelligenz wird benutzt
- zur Routenplanung
- zur Kollisionsvermeidung
- zur Kommunikation mit dem Leitrechner
- zur Kommunikation mit anderen Fahrzeugen und
- zur Auftragsverarbeitung.

Die dezentrale Intelligenz hat vorteilhaft zur Folge, daß das Gesamtsystem relativ fehlerunanfällig ist. Zur Fehlerunauffälligkeit trägt auch bei, daß ein Verschleiß bei den wesentlichen Baukomponenten des Antriebssystems ausgeschlossen ist.

## Patentansprüche

1. Gepäcktransportsystem über lange Distanzen
- mit einem Gepäck-Verteilnetzwerk (3) mit mehreren Aufnahmepunkten (1.1, 1.2...1.n) zur Aufnahme des Gepäcks und mehreren Zielpunkten (2.1, 2.1, 2.3...2.m) zur Entladung des Gepäcks, wobei die Aufnahmepunkte (1.1, 1.2...1.n) und die Zielpunkte (2.1, 2.1, 2.3...2.m) über eine Vielzahl von komplett passiven Schienenmodulen (4) und Kreuzungsmodulen (5) miteinander verbunden sind,
- mit einer Vielzahl von Fahrzeugen (6), welche das Gepäck zwischen den Aufnahmepunkten (1.1, 1.2...1.n) und den Zielpunkten (2.1, 2.1, 2.3...2.m) transportieren, wobei diese Fahrzeuge (6) gemäß dem Magnetschwebeprinzip mittels eines berührungslosen Linearantriebes (12) innerhalb des Gepäck-Verteilnetzwerkes (3) bewegt werden,
- mit einem berührungslosen induktiven Energieübertragungssystem, bestehend aus einem induktiven Energieerzeugungssystem (10) und einer Vielzahl lokaler induktiver Energieaufnahmesysteme (11) in den einzelnen Fahrzeugen (6) und
- mit einem übergeordneten Leitrechner (7), welcher über ein berührungsloses Kommunikationssystem - aufgebaut aus einer übergeordneten Kommunikationseinrichtung (8) und lokalen Kommunikationseinrichtungen (15) in den Fahrzeugen - mit lokalen Rechnern (13) in den einzelnen Fahrzeugen (6) kommuniziert.

2. Gepäcktransportsystem nach Anspruch 1, **dadurch gekennzeichnet, daß** ein Schienenmodul (4) in gewünschter Richtung mit gewünschtem Radius gebogen ist.

3. Gepäcktransportsystem nach Anspruch 1 und/oder 2, **dadurch gekennzeichnet, daß** ein Kreuzungsmodul (5) mit gewünschtem Abzweigewinkel und/oder Radius ausgeführt ist.

4. Gepäcktransportsystem nach einem der vorstehenden Ansprüche, **dadurch gekennzeichnet, daß** ein Kreuzungsmodul (5) vier Anschlüsse für Schienenmodule (4) aufweist, wobei zur Schaffung einer passiven, nicht beweglichen Weiche ohne elektrisch oder magnetisch aktiven Teile oder eines Abzweiges einzelne Anschlüsse eines Kreuzungsmoduls (5) unter Einsatz eines standardisierten Profils verschlossen sind.

5. Gepäcktransportsystem nach einem der vorstehenden Ansprüche, **dadurch gekennzeichnet, daß** einem lokalen Rechner (13) eine die aktuelle Netzwerktopologie betreffende Softwarekarte (14) zugeordnet ist.

6. Gepäcktransportsystem nach einem der vorstehenden Ansprüche, **dadurch gekennzeichnet, daß** eine Vielzahl passiver Standortmelder (9) an den einzelnen Schienenmodulen (4) und/oder Kreuzungsmodulen (5) des Gepäck-Verteilnetzwerkes (3) den Fahrzeugen (6) zur Überprüfung ihres aktuellen Standortes dienen.

7. Gepäcktransportsystem nach Anspruch 6, **dadurch gekennzeichnet, daß** eine Sensorik (16) im Fahrzeug (6) vorgesehen ist, welche im Zusammenwirken mit den passiven Standortmeldern (9) den momentanen Standort des Fahrzeuges feststellt.

8. Gepäcktransportsystem nach Anspruch 7, **dadurch gekennzeichnet, daß** die Sensorik (16) Näherungssensoren umfaßt, die eine präzise und berührungslose Orientierung und Fortbewegung innerhalb der Schienenmodule (4) und Kreuzungsmodule (4) und bezüglich anderer Fahrzeuge sicherstellt.

9. Gepäcktransportsystem nach Anspruch 7 und/oder 8, **dadurch gekennzeichnet, daß** der lokale Rechner (13) in Verbindung mit der Kommunikationseinrichtung (15) sowie in Verbindung mit der Sensorik (16) steht und zur Ansteuerung/Regelung des Linearantriebs (12) dient, wobei diese Ansteuerung/Regelung des Linearantriebs (12) in Abhängigkeit der Signale des übergeordneten Leitrechners (7), der Signale des lokalen Rechners (13) - inklusive Softwarekarte (14) - und der Signale der Sensorik (16) erfolgt.

10. Gepäcktransportsystem nach einem der vorstehenden Ansprüche, **dadurch gekennzeichnet, daß** sich das berührungslose Kommunikationssystem (8, 15) auf Funksignale als Kommunikationssignale stützt.

11. Gepäcktransportsystem nach einem der vorstehenden Ansprüche, **dadurch gekennzeichnet, daß** das berührungslose Kommunikationssystem (8, 15) über das induktive Energieübertragungssystem (10, 11) erfolgt, vorzugsweise durch entsprechende Modulation/Demodulation der Übertragungsfrequenz zur Übermittlung der Kommunikationssignale über die Energieversorgung.

12. Gepäcktransportsystem nach einem der vorstehenden Ansprüche, **dadurch gekennzeichnet, daß** das vom übergeordneten Leitrechner (7) umgesetzte, übergeordnete Gepäckmanagementsystem baukastenartig aufgebaute, den lokalen Rechnern (13) zugeordnete untergeordnete Kontrollsysteme aufweist.

13. Gepäcktransportsystem nach Anspruch 12, **dadurch gekennzeichnet, daß** das übergeordnete Gepäckmanagementsystem den einzelnen untergeordneten, Kontrollsystemen folgende Vorgaben für den Gesamtgepäck-Transportprozeß vorgibt:
• Anzahl der Transportorder
• Aufnahmedestination jeder einzelnen Transportorder
• Ankunftszeit bei Aufnahmedestination
• Abgabedestination
• Ankunftszeit an Abgabedestination
• Priorität jeder einzelnen Transportorder
• Update der Transportorder.

14. Gepäcktransportsystem nach Anspruch 13, **dadurch gekennzeichnet, daß** die einzelnen untergeordneten Kontrollsysteme folgende Informationen an das übergeordnete Gepäckmanagementsystem zurückmelden:
• Bestätigung der einzelnen Transportorder
• Bestätigung der erfolgreichen Ausführung
• eventuell Fehlermeldung.

15. Gepäcktransportsystem nach einem der vorstehenden Ansprüche, **dadurch gekennzeichnet, daß** ein einzelnes Fahrzeug (6) unter Einsatz des lokalen Rechners (13) und des zentralen Leitrechners (7) autonom lokale Entscheidungen ausführt - sogenannte dezentrale, lokale Intelligenz -, wobei jeweils die Signale der Sensorik (16) und die Kommunikationssignale zwischen einzelnen Fahrzeugen (6) und zwischen Fahrzeug (6) und Leitrechner (7) einbezogen sind.

16. Gepäcktransportsystem nach Anspruch 15, **dadurch gekennzeichnet, daß** diese dezentrale, lokale Intelligenz benutzt wird
• zur Routenplanung
• zur Kollisionsvermeidung
• zur Kommunikation mit dem Leitrechner
• zur Kommunikation mit anderen Fahrzeugen und
• zur Auftragsverarbeitung.
